# EUROPÄISCHE PATENTSCHRIFT

(11) **EP 2 406 043 B1**
(45) Veröffentlichungstag und Bekanntmachung des Hinweises auf die Patenterteilung: **15.05.2013**
(21) Anmeldenummer: 10708168.9
(22) Anmeldetag: 01.03.2010
(51) Int. Cl.: B26D 1/00, B26D 3/24, B26D 7/20, B26D 7/26, A21C 15/04

(54) **UNIVERSELLES SCHNEIDEGERÄT FÜR ESSBARE FERTIGPRODUKTE**
UNIVERSAL CUTTING DEVICE FOR FOOD PRODUCTS
DISPOSITIF UNIVERSEL POUR LA COUPE DES PRODUITS ALLIMENTAIRES

(30) Priorität: 12.03.2009 DE 102009012844; 18.09.2009 DE 202009012677 U; 22.09.2009 DE 102009042503
(43) Veröffentlichungstag der Anmeldung: 18.01.2012
(73) Patentinhaber: EPS Europe AG/Ltd, 6331 Hünenberg (CH)
(72) Erfinder: POPP, Thomas, 95032 Hof (DE)
(74) Vertreter: Pröll, Jürgen
(86) Internationale Anmeldenummer: PCT/EP2010/052520
(87) Internationale Veröffentlichungsnummer: WO 2010/102915

(56) Entgegenhaltungen:
- WO-A1-92/20270
- DE-A1- 19 826 114
- US-A- 4 648 300
- US-A- 6 009 786

## Beschreibung

Die Erfindung betrifft ein universelles Schneidegerät für essbare Fertigprodukte, die zum Schneiden von auf einer Schneidplatte liegen. Die Schneidplatte enthält eine Anzahl Schlitze, durch die die Messer einer Messerplatte des Schneidgerätes beim Schneiden hindurch gleiten.

In großen Pizzabäckereien bzw. Schnellrestaurants und Bäckereien, in denen häufig eine sehr große Anzahl von Pizzen, Kuchen oder Torten geschnitten werden müssen, ist ein Schneidegerät unerlässlich.

Eine derartige, aus der DE 198 26114 C2 bekannte Pizzateilmaschine, verwendet einen Pizzaaufnahmeteller, in dem mittig eine Anzahl radial angeordnete Schlitze vorhanden sind. Eine Messerplatte mit mindestens vier Messern wird mit einer Hubbewegung auf die Pizza gedrückt. Sie durchschneiden die Pizza und werden in Schlitze im Pizzaaufnahmeteller abgesenkt. Der Pizzaaufnahmeteller besitzt soviel Schlitze, wie Pizzastücke geschnitten werden sollen.

Da die Pizzen zumeist im tiefgefrorenen oder angefrorenen bzw. nicht mehr warmen Zustand geschnitten werden, aber stets warm serviert werden müssen, ist eine Aufwärmphase für die Pizza erforderlich. Dazu werden die geschnittenen Pizzen herunter von dem Pizzateller in eine, auf die Pizzaaufnahmeteller zugeschnittene Wärmestation geschoben.

Sollten unterschiedlich große runde oder rechteckige oder quadratische Pizzen serviert werden, sind auch unterschiedliche Pizzateller bzw. Schneideinrichtungen erforderlich. Außerdem ist ein kontinuierlicher Ablauf beim Schneiden, Erwärmen und Servieren der Pizzen nicht immer möglich.

Es ist deshalb die Aufgabe der vorliegenden Erfindung ein Schneidegerät vorzuschlagen, das für unterschiedliche Größen und Formen von Pizzen, Kuchen, Torten, Käse, Burger, Gebäck und anderen Esswaren in runden, eckigen oder anderen denkbaren Formen und auch gefrorenen Esswaren geeignet ist und in dem das Schneidegut auf der Schneidplatte zum Erwärmen oder zum Warmhalten verbleiben kann.

Die Aufgabe wird durch die Merkmale des ersten Anspruchs gelöst. Das universelle Schneidegerät für essbare Fertigprodukte enthält eine Schneidplatte und eine Messerplatte, wobei die Schneidplatte eine Anzahl radiale Schneideschlitze besitzt, durch die Messer an der Messerplatte beim Schneiden der essbaren Fertigprodukte hindurch gleiten. Die Schneidplatte entsprechend der vorliegenden Erfindung besitzt zusätzlich zu den Schneideschlitzen, Positionierschlitze. In diesen zusätzlichen Positionierschlitzen sind verschiebbare Anschläge angeordnet, die über die Oberfläche der Schneidplatte hinausragen, und die so eingestellt werden können, dass jeweils das zum Schneiden vorgesehene Schneidgut mittig oder wie gewünscht auf die Schneidplatte gelegt werden kann. An einer Außenseite der Schneidplatte ist mindestens eine Griffvorrichtung mit einem Griff vorhanden. Der Griff ist vorteilhafterweise lösbar an der Griffvorrichtung befestigt.

An der erfindungsgemäßen Messerplatte für das universelle Schneidgerät sind einzelne parallel oder sternförmig angeordnete Messer befestigt, die zum Zerschneiden der auf einer Schneidplatte liegenden Pizza auf diese absenkbar und in Schlitzen der Schneidplatte aufnehmbar sind. An der Messerplatte ist ein über die maximale Ausdehnung der Schlitze in der Schneidplatte reichendes langes Messer befestigt. An der Messerplatte und am

Rückenbereich und Mittenbereich des langen Messers sind Aufnahmen für weitere Messer eingebracht, in die kürzere Messer sternförmig von der Mitte des langen Messers ausgehend oder in einem Abstand parallel zu beiden Seiten des langen Messers befestigt. Die Messer besitzen in den Bereichen, die über den Schlitzen der Schneidplatte liegen, eine große Klingenbreite, und in den Bereichen, in denen keine Schlitze in der Schneidplatte vorhanden sind, eine kleine Klingenbreite. Nach dem Schneiden des essbaren Fertigproduktes ist die Messerplatte so über einen einstellbaren Anschlag abgesenkt, dass die Messerbereiche mit den großen Klingenbreiten durch die Schlitze in der Schneidplatte dringen und die Messerbereiche mit den kleinen Klingenbreiten unmittelbar oberhalb der Schneidplatte liegen.

In einer Ausführungsform besitzt die Schneidplatte in den Bereichen, in denen keine Schlitze vorhanden sind, Nuten, so dass die Schneiden mit den kleinen Klingenbreiten nach dem Schneiden der Pizza in den Nuten liegen. Es ist auch möglich, dass die Schneidplatte an den Bereichen, an denen keine Schlitze vorhanden sind, eine Weichplastebeschichtung besitzt. Dadurch soll erreicht werden, dass die Schneiden mit den kleinen Klingenbreiten nicht abgestumpft werden, wenn sie die Schneidplatte berühren. In einer sehr vorteilhaften Ausführung werden die breiten Messerbereiche kontinuierlich breiter, so dass das Schneidgut nicht gleichzeitig, sondern sukzessive und kontinuierlich, abhängig vom Schneidweg geschnitten wird. Die Schneiden der Messer können auch wellenförmig, zackig usw. geschliffen sein.

Die Anordnung der Messer an der Messerplatte können sternförmig, in jedwedem Winkel zueinander oder parallel oder als geometrische oder einer anderen zweckdienlichen Form angeordnet sein, gegenseitig, untereinander befestigt sein, sodass eine stabile Messerplatte mit den notwendigen Messern entsteht. Wichtig ist dabei, dass in den Bereichen, in denen die Messer nicht durch die Schlitze der Schneidplatte gleiten, die Klingenbreiten angepasst sind. Die Messer können mit den kleinen Klingenbreiten in Nuten oder in geeigneten weicheren Kunststoffbereichen in der Schneidplatte einliegen. Dazu sind geeignete Anschläge für eine Hubbegrenzung der Messerplatte vorhanden.

Die Schneidplatte kann vorzugsweise eine runde oder eckige Form besitzen, wobei bei der runden Form radiale und bei der eckigen Form axiale Schneideschlitze vorhanden sind, und die zusätzlichen Positionierschlitze sind radial oder axial zwischen den Schneideschlitzen angeordnet.

Die zusätzlichen radialen Positionierschlitze, in denen verschiebbare Anschläge vorhanden sind, dienen der Einstellung der Schneidplatte auf die Größe des zu schneidenden Schneidgutes. Sie beginnen bei der runden Form mit dem Radius der kleinsten Pizzen oder Torten und enden mit dem Radius der größten Pizzen oder Torten. Die verstellbaren Anschläge werden so eingestellt, dass die Pizzen oder Torten zentral auf der Schneidplatte liegen. Da die Messer an einer runden Messerplatte vom Zentrum ausgehend radial nach außen verlaufen, muss das Schneidgut, sofern radiale, gleich große Stücke gewünscht werden, immer zentral eingelegt werden. Eine quadratische oder echteckige Pizza, die zentral eingelegt ist, kann dann auch mit vier radialen Messern in der Messerplatte geviertelt werden. In diesem Fall sind die vier Messer 90° versetzt in der Messerplatte angeordnet und eine quadratische oder rechteckige Pizza wird in vier Teile geschnitten.

Die Schneidplatte kann auch eine rechteckige oder quadratische Form besitzen und die zusätzlichen Positionierschlitze können dann beliebig zu den Schneidschlitzen angeordnet sein. An einer Seite der Schneidplatte ist mindestens eine Griffvorrichtung mit einem Griff vorhanden. Bei der rechteckigen oder quadratischen Schneidplatte sind vorteilhafterweise zwei Griffvorrichtungen mit je einem Griff vorhanden, da die Schneidplatte dann sicherer transportiert werden kann.

Vorteilhaft ist, wenn die zusätzlichen Positionierschlitze nur auf eine Hälfte der Schneidplatte beschränkt sind. Wenn diese Positionierschlitze und dessen Anschläge symmetrisch zur Griffvorrichtung liegen, kann das Schneidegut mit der Schneidplatte wie mit einem Tortenheber unterschoben und aufgenommen und an die voreingestellten Anschläge geschoben werden.

Zur Erleichterung der Einstellung der Anschläge auf die Größe des Schneidgutes kann die Schneidplatte zur genauen Einstellung der Anschläge Markierungen besitzen. Diese Markierungen können Kreise, Rechtecke oder Quadrate sein, die auf der Schneidplatte angebracht sind, oder es können frei wählbar bestimmte Punkte an den zusätzlichen Positionierschlitzen markiert sein.

In einem Ausführungsbeispiel kann die Schneidplatte ferromagnetisch sein und die Anschläge können Magnete darstellen. Die magnetischen Anschläge können kleine Nocken besitzen, die in senkrechten Arretierschlitzen der Positionierschlitze eingerastet sind.

Die Schneidplatte ist entsprechend der vorhandenen Wärmequelle zum Aufwärmen des geschnittenen Schneidgutes ausgerüstet.

Die Wärmequelle zum Erwärmen z.B. einer geschnittenen Pizza kann ein elektrische Heizkörper sein, der in der Schneidplatte angeordnet und an Kontakte geführt ist, wobei die Kontakte außerhalb des Schneidegerätes mit einer Spannungsquelle verbunden werden können. Die Schneidplatte kann auch aus einem mikrowellengeeigneten Material bestehen. Die Schneidplatte mit der geschnittenen kalten Pizza kann dann außerhalb des Schneidegerätes zum Aufwärmen oder Warmhalten kurz in ein Mikrowellengerät eingelegt werden.

Es ist weiterhin möglich, dass die Schneidplatte aus einem induktionsgeeigneten Material besteht, und außerhalb des Schneidegerätes für eine einstellbare Zeit, d.h. bis zum Erreichen der gewünschten Temperatur auf eine Induktionsplatte gelegt wird.

In jedem Fall sollten die Wärmequellen zum Auftauen und Erwärmen oder Warmhalten einer Pizza eine Regel- und/oder Abschaltautomatik besitzen, da die Pizza lediglich auf Esstemperatur erwärmt werden soll.
Die Erfindung soll nachfolgend an zwei Ausführungsbeispielen erläutert werden. Gleiche Bezugszahlen zeigen in den einzelnen Zeichnungen gleiche oder ähnliche Teile.

Fig. 1 zeigt eine runde Schneidplatte entsprechend der vorliegenden Erfindung;

Fig. 2 zeigt eine rechteckige Schneidplatte entsprechend der vorliegenden Erfindung;

Fig. 3 zeigt eine Messerplattet entsprechend der vorliegenden Erfindung; und

Fig. 4 verdeutlicht die Wirkungsweise des Schneidgerätes.

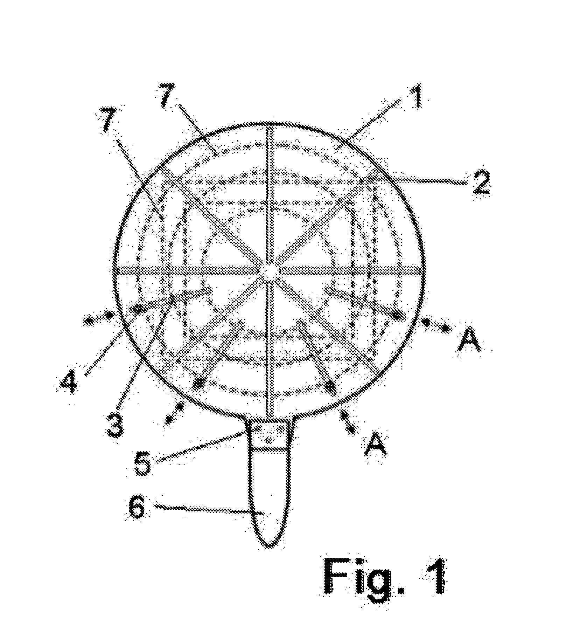

In Fig. 1 ist ein erstes Ausführungsbeispiel der Schneidplatte entsprechend der vorliegenden Erfindung dargestellt. Die Schneidplatte 1 besitzt eine runde Form. Zwischen den Schneideschlitzen 2 sind zusätzliche Positionierschlitze 3 vorhanden. In den zusätzlichen Positionierschlitzen 3 sind verschiebbare Anschläge 4 zum Anlegen des zu schneidenden essbaren Fertigproduktes angeordnet. Die Verschiebbarkeit der Anschläge 3 ist durch die Pfeile A gekennzeichnet. Am Umfang der Schneidplatte 1 ist eine Griffvorrichtung 5 mit einem Griff 6 vorhanden. Auf der Schneidplatte 1 befinden sich Markierungen 7, die zur Vereinfachung der Einstellung der Anschläge 4 dienen, damit das Schneidgut in dem Schneidegerät seine gewünschte, exakte Lage erhält. In dem Ausführungsbeispiel sind die Anschläge 4 auf die größtmögliche runde Form des Schneidgutes eingestellt. Die zusätzlichen Schlitze 3 sind in diesem Ausführungsbeispiel nur auf der Seite des Griffes 6 angeordnet, so dass die Schneidplatte 1 wie ein Tortenheber unter das Schneidgut geschoben werden kann, um es an die Anschläge 4 zu platzieren. Ist die Pizza oder die Torte geschnitten, wird sie, noch auf der Schneidplatte 1 liegend, dem Schneidegerät entnommen und entweder auf den Essteller geschoben oder mit der Schneidplatte in eine Wärmequelle gelegt.

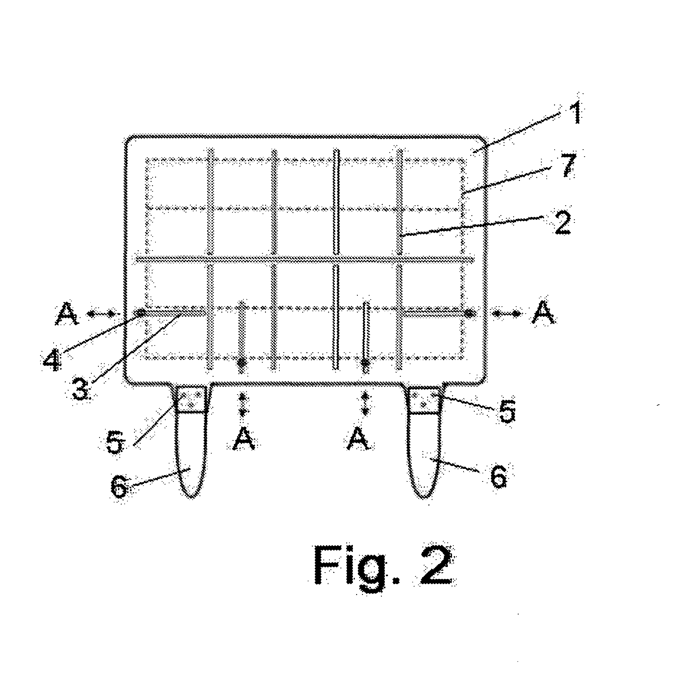

In Fig. 2 ist ein zweites Ausführungsbeispiel der Schneidplatte 1 entsprechend der vorliegenden Erfindung dargestellt. Die Schneidplatte 1 besitzt in diesem Fall eine rechteckige Form. Zwischen den Schneideschlitzen 2 sind zusätzliche Positionierschlitze 3 parallel zu den Schneideschlitzen 2 angeordnet. In den zusätzlichen Positionierschlitzen 3 sind verschiebbare Anschläge 4 zum Positionieren des essbaren Fertigproduktes angeordnet. Die Verschiebbarkeit der Anschläge 3 ist durch die Pfeile A gekennzeichnet. Am Umfang der Schneidplatte 1 sind in diesem Fall zwei Griffvorrichtungen 5 mit je einem Griff 6 vorhanden. Die Schneideschlitze 2 liegen senkrecht zueinander nur auf der Seite der Griffe 6 symmetrisch zu den Griffen 6. Auch in diesem Beispiel kann die Schneidplatte 1 zum Aufnehmen und Ablegen des Schneidgutes verwendet werden. Die Markierungen 7 dienen zur Einstellung der Anschläge 4 auf der Schneidplatte 1 auf die gewünschte Größe des Schneidgutes.

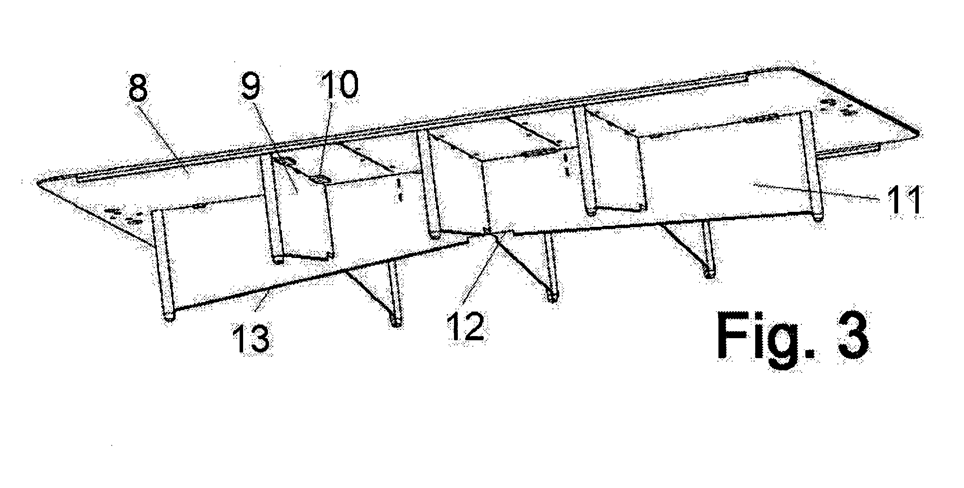

In Fig. 3 ist eine Messerplatte 8 für ein universelles Schneidegerät entsprechend der vorliegenden Erfindung dargestellt, an der einzelne parallel angeordnete Messer 9 befestigt sind, die zum Zerschneiden der auf einer Schneidplatte 1 liegenden Pizza (nicht gezeigt) auf diese abgesenkt und in Schneideschlitze 2 der Schneidplatte 1 aufgenommen werden. An der Messerplatte 8 ist ein über die maximale Ausdehnung der Schneidplatte 1 reichendes langes Messer 11 befestigt. Sowohl an der Messerplatte 8 als auch am Rückenbereich und am Seitenbereich des langen Messers 11 sind in Abständen parallel zu beiden Seiten des langen Messers 11 weitere Messer 9 befestigt. Die Klingenbreiten der Messer 9 sind in den Bereichen, die über den Schneideschlitzen 2 der Schneidplatte 1 liegen, größer, und in den Bereichen, in denen keine Schneideschlitzen 2 in der Schneidplatte 1 vorhanden sind, in die die Messer 9, 11 eingelenkt werden können, kleiner. In Fig. 3 besitzen die Messer 9 zur Herstellung der kleinen Klingenbreite eine Aussparung 12. Nach dem Schneiden des essbaren Fertigproduktes 14 ist die Messerplatte 8 so über einen einstellbaren Anschlag 15 abgesenkt, dass die Messerbereiche mit den großen Klingenbreiten durch die Schneideschlitze 2 in der Schneidplatte 1 dringen und die Messerbereiche mit den kleinen Klingenbreiten unmittelbar oberhalb der Schneidplatte 1 liegen. Die Pizza oder dergleichen wird dabei mit den Messern 9, 11 mit den kleinen Klingenbreiten zerschnitten, aber diese Teile der Messer 9, 11 bleiben oberhalb der Schneidplatte in einer Nut oder in einer Weichplastebeschichtung der Schneidplatte liegen. Die Messer 9, 11 besitzen eine schräge Schneide 13, was zu einem wirklichen Zerschneiden des Schneidgutes 14 führt und ein Zerdrücken verhindert.

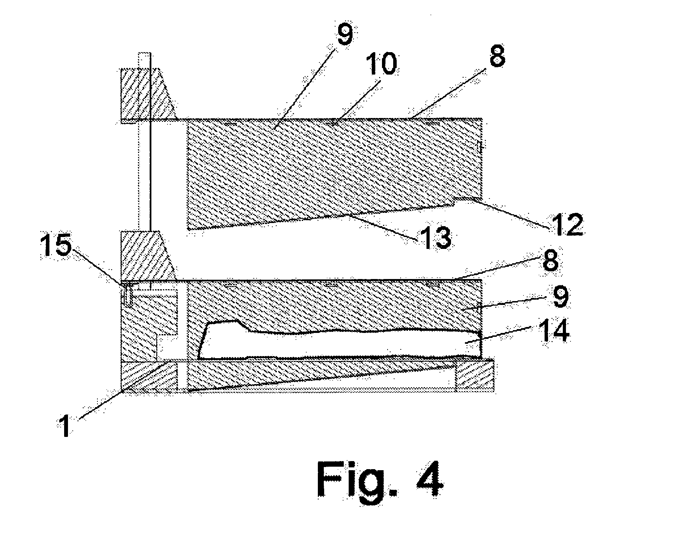

In Fig. 4 wird die Wirkungsweise der Messerplatte 8 verdeutlicht. Eine angehobene Stellung der Messerplatte 8 ist im oberen Teil der Zeichnung und die Stellung nach dem Schneiden ist im unteren Teil der Zeichnung dargestellt. Die Bezugszahl 8 bezeichnet die Messerplatte im Schnitt. An der Messerplatte 8 ist ein Messer 9 erkennbar. Das Messer 9 besitzt Aufnahmen 10 zur Befestigung an der Messerplatte 8 und an dem langen Messer 11. Der Messerbereich mit den kleinen Klingenbreiten wird durch die Aussparung 12 gebildet. Im unteren Bereich der Zeichnung ist die Stellung dargestellt, die die Messerplatte 8 nach dem Schneiden der Pizza 14 eingenommen hat. Die Pizza 14 liegt auf der Schneidplatte 1. Das Messer 9 mit der großen Klingenbreite hat die Pizza 14 durchschnitten und liegt in den Schneideschlitzen 2 der Schneidplatte 1. Der Messerbereich mit der kleinen Klingenbreite hat die Pizza 14 ebenfalls zerschnitten, liegt aber oberhalb der Schneidplatte 1. Die Einstellung der Messerplatte 8 erfolgt über den Anschlag 15, damit die Schneiden der schmalen Messerbereiche nicht auf die Schneidplatte 1 aufschlagen.

### Verzeichnis der verwendeten Bezugszeichen

| | |
|---|---|
| 1 | Schneidplatte |
| 2 | Schneideschlitzen |
| 3 | Positionierschlitze |
| 4 | Anschläge |
| 5 | Griffvorrichtung |
| 6 | Griff |
| 7 | Markierungen |
| 8 | Messerplatte |
| 9 | Messer |
| 10 | Aufnahmen |
| 11 | Langes Messer |
| 12 | Aussparung |
| 13 | Messerschneide |
| 14 | Essbares Fertigprodukt |
| 15 | Anschlag |

## Patentansprüche

1. Universelles Schneidegerät für essbare Fertigprodukte, mit einer Schneidplatte, die eine Anzahl radiale Schneideschlitze enthält, und einer Messerplatte, deren Messer beim Schneiden der essbaren Fertigprodukte durch die Schneidschlitze hindurch gleiten, **dadurch gekennzeichnet, dass** die Schneidplatte (1) eine beliebige Form besitzt und zwischen den Schneideschlitzen (2) zusätzliche Positionierschlitze (3) vorhanden sind, dass in den zusätzlichen Positionierschlitzen (3) verschiebbare Anschläge (4) zum Positionieren des essbaren Fertigproduktes (14) angeordnet sind, dass am Umfang der Schneidplatte (1) mindestens eine Griffvorrichtung (5) mit einem Griff (6) vorhanden ist und dass die Schneidplatte (1) an eine Wärmequelle zum Aufwärmen oder Warmhalten des geschnittenen essbaren Fertigproduktes (14) anschließbar ist, dass an der Messerplatte (8) ein über die maximale Ausdehnung der Schneideschlitzen (2) der Schneidplatte (1) reichendes langes Messer (11) befestigt ist, wobei an der Messerplatte (8) und am Rücken und auf der Klinge des langen Messers (11) Aufnahmen (10) für weitere Messer (9) eingebracht sind, in die kürzere Messer (9) sternförmig von der Mitte des langen Messers (11) ausgehend oder in einem Abstand parallel zu beiden Seiten des langen Messers (11) befestigt sind, dass die Messer (9, 11) in den Bereichen, die über den Schneideschlitze (2) der Schneidplatte (1) liegen, eine große Klingenbreite, und in den Bereichen, in denen keine Schneideschlitze (2) in der Schneidplatte (1) vorhanden sind, eine kleine Klingenbreite besitzen, wobei nach dem Schneiden des essbaren Fertigproduktes (14) die Messerplatte (8) so über einen einstellbaren Anschlag (15) abgesenkt ist, dass die Messerbereiche mit der großen Klingenbreite durch die Schneideschlitze (2) in der Schneidplatte (1) dringen und die Messerbereiche mit den kleinen Klingenbreiten unmittelbar oberhalb der Schneidplatte (1) liegen.

2. Universelles Schneidegerät nach Anspruch 1, **dadurch gekennzeichnet, dass** die Schneidplatte (1) in den Bereichen, in denen keine Schneideschlitze (2) in der Schneidplatte (1) vorhanden sind, Nuten besitzen, so dass die Schneiden (13) der Messerbereiche mit den kleinen Klingenbreiten nach dem Schneiden des essbaren Fertigproduktes (14) in den Nuten liegen.

3. Universelles Schneidegerät nach Anspruch 1, **dadurch gekennzeichnet, dass** die Schneidplatte (1) an den Bereichen, an denen keine Schlitze vorhanden sind, eine Weichplastebeschichtung besitzt

4. Universelles Schneidegerät nach einem der Ansprüche 1 bis 3, **dadurch gekennzeichnet, dass** die Messerbereiche mit den großen Klingenbreiten kontinuierlich verbreitert sind, so dass das Schneidgut nicht gleichzeitig, sondern sukzessive und kontinuierlich, abhängig vom Schneidweg geschnitten wird.

5. Universelles Schneidegerät nach einem der Ansprüche 1 bis 4, **dadurch gekennzeichnet, dass** die Scheiden (13) der Messer (9, 11) wellenförmig oder zackig geschliffen sind.

6. Universelles Schneidegerät nach Anspruch 1, **dadurch gekennzeichnet, dass** die die Schneidplatte (1) eine runde Form und radiale Schneideschlitze (2) besitzt und die zusätzlichen Positionierschlitze (3) radial zwischen den Schneideschlitzen (2) angeordnet sind.

7. Universelles Schneidegerät nach Anspruch 1, **dadurch gekennzeichnet, dass** die die Schneidplatte (1) eine rechteckige Form und parallele Schneideschlitze (2) besitzt und die zusätzlichen Positionierschlitze (3) parallel zwischen den Schneideschlitzen (2) angeordnet sind.

8. Universelles Schneidegerät nach Anspruch 6 oder 7, **dadurch gekennzeichnet, dass** die zusätzlichen Positionierschlitze (3) nur auf einer Hälfte der Schneidplatte (1) symmetrisch zu der mindestens einen Griffvorrichtungen (5) angeordnet sind.

9. Universelles Schneidegerät nach einem der Ansprüche 1 bis 8, **dadurch gekennzeichnet, dass** an einer Seite der Schneidplatte (1) eine oder zwei lösbare Griffvorrichtungen (5) mit je einem Griff (6) vorhanden sind.

10. Universelles Schneidegerät nach einem der Ansprüche 1 bis 9, **dadurch gekennzeichnet, dass** die Schneidplatte (1) zur genauen Einstellung der Anschläge (4) Markierungen (7) besitzt.

11. Universelles Schneidegerät nach Anspruch 10, **dadurch gekennzeichnet, dass** die Schneidplatte (1) ferromagnetisch ist und die Anschläge (4) Magnete darstellen.

12. Universelles Schneidegerät nach Anspruch 11, **dadurch gekennzeichnet, dass** die magnetischen Anschläge (4) kleine Nocken besitzen, die in senkrechten Arretierschlitzen der Positionierschlitze (3) eingerastet sind.

13. Universelles Schneidegerät nach einem der Ansprüche 1 bis 12, **dadurch gekennzeichnet, dass** die Wärmequelle elektrische Heizkörper in der Schneidplatte (1) besitzen, die an Kontakte geführt sind, wobei die Kontakte außerhalb des Schneidegerätes mit einer Spannungsquelle verbindbar sind.

14. Universelles Schneidegerät nach einem der Ansprüche 1 bis 12, **dadurch gekennzeichnet, dass** der die Schneidplatte (1) aus einem mikrowellengeeigneten, lebensmittelechtem Material besteht, und außerhalb des Schneidegerätes in ein Mikrowellengerät einschiebbar ist.

15. Universelles Schneidegerät nach einem der Ansprüche 1 bis 12, **dadurch gekennzeichnet, dass** die Schneidplatte (1) aus einem für Induktionserwärmung geeigneten Material besteht, und außerhalb des Schneidegerätes auf eine Induktionsplatte legbar ist.

## Claims

1. Universal cutting apparatus for edible finished products, with a cutting plate, which includes a number of radial cutting slots, and a knife plate, the knives of which slide through the cutting slots during cutting of the edible finished products, **characterised in that** the cutting plate (1) has a desired shape and additional positioning slots (3) are present between the cutting slots (2), that abutments (4) for positioning the edible finished product (14) are displaceably arranged in the additional positioning slots (3), that at least one grip device (5) with a grip (6) is present at the periphery of the cutting plate (1) and that the cutting plate (1) is connectible with a heat source for heating or keeping warm the cut edible finished product (14), that a long knife (11) extending over the maximum length of the cutting slots (2) of the cutting plate (1) is fastened to the knife plate (8), wherein mounts for further knives (9) are formed at the knife plate (8) and at the back and on the blade of the long knife (11), in which mounts shorter knives (9) are fastened to radiate in star shape from the centre of the long knife (11) or are fastened at a spacing parallel to both sides of the long knife (11), that the knives (9, 11) have a large blade width in the regions lying above the cutting slots (2) of the cutting plate (1) and a small blade width in the regions in which no cutting slots (2) are present in the cutting plate (1), wherein after cutting of the edible finished product (14) the knife plate (8) is so lowered over a settable abutment (15) that the knife regions with the large blade width penetrate through the cutting slots (2) in the cutting plate (1) and the knife regions with the small blade widths lie directly above the cutting plate (1).

2. Universal cutting apparatus according to claim 1, **characterised in that** the cutting plate (1) has grooves in the region in which no cutting slots (2) are present in the cutting plate (1) so that the cutting edges of the knife regions with the small blade widths lie in the grooves after cutting of the edible finished product (14).

3. Universal cutting apparatus according to claim 1, **characterised in that** the cutting plate (1) has a soft plastics coating at the regions at which no slots are present.

4. Universal cutting apparatus according to any one of claims 1 to 3, **characterised in that** the knife regions with the large blade widths are continuously widened so that the material to be cut is cut not at the same time, but successively and continuously depending on the cutting path.

5. Universal cutting apparatus according to any one of claims 1 to 4, **characterised in that** the cutting edges (13) of the knives (9, 11) are formed to be wave-shaped or jagged.

6. Universal cutting apparatus according to claim 1, **characterised in that** the cutting plate (1) has a round shape and radial cutting slots (2) and the additional positioning slots (3) are arranged radially between the cutting slots (2).

7. Universal cutting apparatus according to claim 1, **characterised in that** the cutting plate (1) has a rectangular shape and parallel cutting slots (2) and the additional positioning slots (3) are arranged parallelly between the cutting slots (2).

8. Universal cutting apparatus according to claim 6 or 7, **characterised in that** the additional positioning slots (3) are arranged only on one half of the cutting plate (1) symmetrically with respect to the at least one grip device (5).

9. Universal cutting apparatus according to any one of claims 1 to 8, **characterised in that** one detachable grip device (5) with a grip (6) or two detachable grip devices (5) each with respective grip (6) is or are present at one side of the cutting plate (1).

10. Universal cutting apparatus according to any one of claims 1 to 9, **characterised in that** the cutting plate (1) has markings (7) for precise setting of the abutments (4).

11. Universal cutting apparatus according to claim 10, **characterised in that** the cutting plate (1) is ferromagnetic and the abutments (4) represent magnets.

12. Universal cutting apparatus according to claim 11, **characterised in that** the magnetic abutments (4) have small dogs which are detented in the perpendicular locking slots of the positioning slots (3).

13. Universal cutting apparatus according to any one of claims 1 to 12, **characterised in that** the heat source comprises electric heating bodies, which are led to contacts, in the cutting plate (1), wherein the contacts are connectible outside the cutting apparatus with a voltage source.

14. Universal cutting apparatus according to any one of claims 1 to 12, **characterised in that** the cutting plate (1) consists of a material suitable for microwaves and inert relative to foodstuffs and outside the cutting apparatus can be pushed into a microwave appliance.

15. Universal cutting apparatus according to any one of claims 1 to 12, **characterised in that** the cutting plate (1) consists of a material suitable for induction heating and, outside the cutting apparatus, can be placed on an induction hob.

## Revendications

1. Appareil universel de découpe pour les produits finis comestibles, avec une plaque de découpe qui contient quelques fentes de découpe radiales, et une plaque de couteau dont le couteau glisse à travers la fente de découpe lors du découpage des produits finis comestibles, caractérisé en cela que la plaque de découpe (1) possède une forme au choix et qu'il y a entre les fentes de découpe (2) des fentes supplémentaires de positionnement (3), que dans les fentes supplémentaires de positionnement (3), il y a des butées (4) coulissantes pour positionner le produit fini comestible (14), que sur la circonférence de la plaque de découpe (1), il y a au moins un dispositif à poignée (5) avec une poignée (6) et que la plaque de découpe (1) peut être branchée à une source de chaleur pour réchauffer ou maintenir au chaud un produit fini comestible (14) découpé, que sur la plaque de couteau (8), un couteau (11) dont la longueur s'étend sur l'extension maximale des fentes de découpe (2) de la plaque de découpe (1) est fixé, des logements (10) pour des couteaux supplémentaires (9) se trouvant sur la plaque de couteau (8) et sur le dos et la lame du long couteau (11) dans lesquelles les couteaux les plus courts (9) partent en forme d'étoile du milieu du long couteau (11) ou sont fixés à une distance parallèle des deux côtés du long couteau (11), que les couteaux (9, 11) dans les zones situées au-dessus de la fente de découpe (2) de la plaque de découpe (1) possèdent une grande largeur de lame et dans les zones dans lesquelles il n'y a aucune fente de découpe (2) dans la plaque de découpe (1), ils possèdent une petite largeur de lame, la plaque de couteau (8) après le découpage du produit comestible fini (14) étant abaissée au-dessus d'une butée réglable (15) de sorte que les zones des couteaux s'insèrent avec la grande largeur de lame à travers la fente de découpe (2) dans la plaque de découpe (1) et que les zones de couteaux avec les petites largeurs de lame se trouvent directement au-dessus de la plaque de découpe (1).

2. Appareil universel de découpe selon la revendication 1 caractérisé en cela que la plaque de découpe (1) dans les zones dans lesquelles il n'y a aucune fente de découpe (2) dans la plaque de découpe (1) possèdent des rainures de sorte à ce que les lames (13) des zones du couteau avec les petites largeurs de lame se trouvent après le découpage du produit fini comestible (14) dans les rainures.

3. Appareil universel de découpe selon la revendication 1 caractérisé en cela que la plaque de découpe (1) dans les zones dans lesquelles il n'y a aucune fente possède un revêtement en plastique souple.

4. Appareil universel de découpe selon l'une des revendications 1 à 3 caractérisé en cela que les zones des couteaux avec les grandes largeurs de lame sont élargies en continu si bien que le produit découpé n'est pas découpé simultanément mais successivement et en continu en fonction de la voie de découpage.

5. Appareil universel de découpe selon l'une des revendications 1 à 4 caractérisé en cela que les lames (13) des couteaux (9, 11) sont meulées en forme de vagues ou avec des dents.

6. Appareil universel de découpe selon la revendication 1 caractérisé en cela que la plaque de découpe (1) possède une forme ronde et des fentes de découpe radiales (2) et que les fentes supplémentaires de positionnement (3) sont situées de manière radiale entre les fentes de découpe (2).

7. Appareil universel de découpe selon la revendication 1 caractérisé en cela que la plaque de découpe (1) possède une forme rectangulaire et des fentes de découpe parallèles (2) et que les fentes supplémentaires de positionnement (3) sont situées de manière parallèle entre les fentes de découpe (2).

8. Appareil universel de découpe selon la revendication 6 ou 7 caractérisé en cela que les fentes supplémentaires de positionnement (3) sont situées uniquement sur une moitié de la plaque de découpe (1) de manière symétrique à au moins l'un des dispositifs de poignées (5).

9. Appareil universel de découpe selon l'une des revendications 1 à 8 caractérisé en cela que sur un côté de la plaque de découpe (1), il y a un ou deux dispositifs détachables de poignée (5) avec respectivement une poignée (6).

10. Appareil universel de découpe selon l'une des revendications 1 à 9 caractérisé en cela que la plaque de découpe (1) possède des marquages (7) pour le réglage précis des butées (4).

11. Appareil universel de découpe selon la revendication 10 caractérisé en cela que la plaque de découpe (1) est ferromagnétique et que les butées (4) constituent des aimants.

12. Appareil universel de découpe selon la revendication 11 caractérisé en cela que les butées magnétiques (4) possèdent de petites cames qui sont insérées dans des fentes de blocage verticales des fentes de positionnement (3).

13. Appareil universel de découpe selon l'une des revendications 1 à 12 caractérisé en cela que la source de chaleur possède des corps chauffants électriques dans la plaque de découpe (1) qui passent sur des contacts, les contacts pouvant être connectés en dehors de l'appareil de découpe avec une source de tension.

14. Appareil universel de découpe selon l'une des revendications 1 à 12 caractérisé en cela que la plaque de découpe (1) est composée d'un matériau pouvant être mis au micro-ondes, compatible avec les aliments et peut être glissée à l'extérieur de l'appareil de découpe dans un micro-ondes.

15. Appareil universel de découpe selon l'une des revendications 1 à 12 caractérisé en cela que la plaque de découpe (1) est composée d'un matériau convenant au chauffage par induction et peut être placée en dehors de l'appareil de découpe sur une plaque à induction.
